# EUROPEAN PATENT SPECIFICATION

(11) **EP 0 440 292 B1**
(45) Date of publication and mention of the grant of the patent: **11.09.1996**
(21) Application number: 91200151.8
(22) Date of filing: 25.01.1991
(51) Int. Cl.: C08L 63/02, C08L 9/02, C08G 59/62, C09D 163/00

(54) **Rubber modified epoxy resin compositions**
Kautschuk-modifizierte Epoxyharzzusammensetzungen
Compositions de résine époxy modifiées par du caoutchouc

(30) Priority: 29.01.1990 US 471456
(43) Date of publication of application: 07.08.1991
(73) Proprietor: SHELL INTERNATIONALE RESEARCH MAATSCHAPPIJ B.V., NL-2596 HR Den Haag (NL)
(72) Inventor: Marx, Edward John, Houston, Texas 77070 (US)

(56) References cited:
- FR-A- 2 159 299
- GB-A- 1 407 851
- LU-A- 66 707
- US-A- 3 770 698

## Description

The invention relates to elastomer modified phenolic compositions which can be employed to improve the properties of epoxy resin powder coating formulations, to curable epoxy resin compositions and to coatings made from such compositions.

Rubber-modified epoxy resins are well known. Rubber modification, by blending or co-reacting elastomeric compounds, is employed to improve such physicial properties of epoxy resins as toughness, low profile characteristics, flexibility, and adhesion, producing resins for improved corrosion and chip resistant coatings.

In the automotive industry powder coatings having corrosion and chip resistance are used as primer coatings.

For example, in U.S. Patent Numbers 4,581,424, 4,602,053, 4,608,313, and 4,614,683, numerous organic solvent-based coating compositions useful as chip resistant primers have been proposed, However, these coating compositions have a high volatile organic compound (VOC) content, which poses a problem for industries attempting to meet govermental guidelines on VOCs.

Powder coatings, which have the advantage of very low VOC, have been suggested, as in U.S. Patent No. 4,804,581, which discloses a coating composition comprising an elastomer-modified epoxy derived from a polyepoxide and of from 5 to 35 weight percent of a functionally-terminated diene-containing polymer and a carboxy-functional polyester. Although in said US patent it is stated that epoxy resins used as powder coatings may be modified with up to about 35 weight percent functionally-terminated diene-containing polymer, it has been found that high levels of rubber modifier in the epoxy resin contributes to stability and viscosity problems in the composition.

It is therefore an object of the invention to provide curing agents for use in epoxy resin based powder coating compositions, such compositions showing good flow and high impact resistance.

According to the invention, there are provided elastomer-modified phenolic compositions having an average of at least 1.5 terminal hydroxyl groups per molecule and a phenolic equivalent weight of from 300 g to 2000 g which are obtainable by contacting in a reaction mixture an epoxy resin (a) having on average more than 1 epoxy group per molecule, a functionalized elastomer (b) comprising at least 1.5 functional groups which are reactive with epoxy or hydroxy groups, per molecule and an equivalent excess with respect to (a) of a dihydric phenol (c), at a temperature of from 40 °C to 200 °C in the presence of a catalyst for a period of time sufficient for the essentially complete consumption of the epoxy groups.

Suitable functionalized elastomers (b) are generally any elastomers functionalized at the end or middle portion of the elastomeric molecule. Suitable functional groups include, for example, carboxy, amino, hydroxyl, epoxy, mercaptan, anhydride and isocyanate. Functionally-terminated diene-containing polymers useful in modifying the phenolic compound (c) and the epoxy resin (a) are preferably of the formula X-B-X wherein B is a polymer backbone polymerized from material selected from C₄ to C₁₀ dienes; a C₄ to C₁₀ diene and a vinyl aromatic monomer (e.g. styrene, an alkyl-substituted styrene, a halo-substituted styrene); a C₄ to C₁₀ diene and a vinyl nitrile (e.g., acrylonitrile or methacrylonitrile); a C₄ to C₁₀ diene, a vinyl nitrile and a vinyl aromatic monomer; or a C₄ to C₁₀ diene, a vinyl nitrile and an acrylate of the formula CH₂=CR-COOR¹ wherein R and R¹ are independently or both hydrogen or a C₁ to C₁₀ alkyl. X can be any functional group that can react with a phenolic hydroxyl or an oxirane. Suitable X include, for example, carboxy, amino, hydroxyl, epoxy, mercaptan, anhydride and isocyanate groups.

Preferably the functionally-terminated diene-containing polymer is carboxyl-terminated polybutadiene, carboxyl-terminated poly(butadiene-acrylonitrile), carboxyl-terminated poly(butadiene-acrylonitrile-acrylic acid), with carboxyl-terminated poly(butadiene-acrylonitrile) (CTBN) being the most preferred.

Suitable elastomers (b) functionalized at a middle portion include, for example, carboxylated polybutadiene, carboxylated poly(butadiene-styrene), mid-block carboxylated poly(styrene-ethylene/butadiene-styrene), amidated poly(butadiene-styrene), mercapto-polybutadiene, epoxidized polybutadiene and epoxidized poly(butadiene-styrene).

Commercial examples of suitable functionalized elastomeric polymers include HYCAR (HYCAR is a trade mark) carboxy-terminated liquid polymers manufactured by B.F. Goodrich and carboxylated KRATON (KRATON is a trade mark) thermoplastic elastomers manufactured by Shell Chemical Company.

The functionalized elastomer can be a hydrogenated polymer in which the backbone is hydrogenated. The elastomer can be a random, a block, a radical or a star copolymer. The number average molecular weights of the functionalized elastomer lies preferably within the range of from 1,000 to 50,000.

The most preferred functionalized elastomer, the carboxyl-terminated butadiene-acrylonitrile copolymer, generally includes of from 0 to 30 weight percent acrylonitrile and of from 70 to 100 weight percent butadiene, preferably of from 10 to 26 weight percent acrylonitrile and of from 74 to 90 weight percent butadiene. In addition to the terminal carboxyl groups, other functional groups such as amino, phenolic, hydroxyl, epoxy, mercaptan or anhydride may be pendent on the chain. Typically, the functionality of the functionally-terminated diene-containing polymer has a value within the range of from 1.1 to 2.5, preferably within the range of from 1.8 to 2.3. Generally, carboxyl-terminated butadiene-acrylonitrile copolymers have number average molecular weights in the range of from 3,000 to 5,000, preferably in the range of from 3,200 to 4,300. Commercial examples of such polymers include those available from B.F. Goodrich under the trade mark HYCAR.

Preferably the elastomer-modified phenolic composition of the invention comprises of from 5 to 35 weight percent, based on the total weight of compounds (a) + (b) + (c) of a functionalized elastomer (b). Suitable phenolic compounds (c) are polyhydric phenols, including dihydric phenols having two hydroxyl groups attached to an aromatic or polyaromatic nucleus, such as, for example, resorcinol, catechol, 2,2-bis(4-hydroxyphenyl)propane (bisphenol A), 4,4'-sulfonyldiphenol and dihydroxy diphenyl methane. Preferred dihydric phenols are bis(hydroxyphenyl)alkanes, 2,2-bis(4-hydroxyphenyl) propane being most preferred.

The elastomer-modified phenolic composition is generally prepared by reacting an epoxy resin (a) with a functionalized elastomer (b) and an equivalent excess, with respect to the epoxy resin of a polyhydric phenol (c) in order to obtain a product having terminal hydroxyl groups and a phenolic equivalent weight of from 300 g to 2000 g, preferably of from 400 g to 1000 g. Preferably the elastomer modified phenolic composition is prepared by reacting a stoichiometric excess of a dihydric phenol with a linear diepoxy resin in the presence of a catalyst as described in U.S. Patent 4,767,832. The functionalized elastomer, diepoxy resin and the dihydric phenol can be added to a reactor concurrently and reacted together or in sequence and reacted stepwise, so long as the objective of an elastomer-modified phenolic composition having an average of at least 1.5 terminal reactive phenolic hydroxyl groups is achieved. The amount of the phenolic compound in the mixture will generally be of from 1 to 4, preferably of from 1.5 to 2, molar equivalent of the epoxy resin, in order to obtain the desired molecular weight range.

When the functionalized elastomer (b) is added in the absence of the epoxy resin (a), an epoxy resin (a) and equivalent excess of dihydric phenol (c) may be subsequently added in order to obtain the desired phenolic equivalent weight for the elastomer-modified phenolic composition.

The modification of the phenolic compound with the functionalized elastomer is generally conducted at a temperature within the range of from 40°C to 200°C, preferably within the range of from 140°C to 190°C, for a reaction time of from 0.5 to 5 hours in order to achieve essentially complete consumption of the epoxy groups. A catalyst for the modification is added to the reaction mixture in amounts of from 0.01 to 1.0 percent by weight. Suitable catalysts include tertiary amine catalysts such as tributylamine, quaternary ammonium salts such as tetrabutylammonium chloride, tertiary phosphates such as triphenylphosphate, quaternary phosphonium salts such as ethyltriphenyl phosphonium iodide, metal salts such as AMC-2 (a chromium octoate salt), and combinations of catalysts in staged reactions, with the quaternary phosphonium salts such as ethyltriphenyl phosphonium iodide (ETPPI) being preferred. In general the reaction product of the phenolic compound (c), epoxy resin (a) and the functionalized elastomer (b) upon cooling is a friable solid.

The epoxy resin (a) used has an 1,2-epoxy equivalency greater than one and preferably of from two or more. The epoxy resin (a) may be linear or branched, saturated or unsaturated, aliphatic, cycloaliphatic, aromatic or heterocyclic. Examples of epoxy resins suitable for use in the invention include polyglycidyl ethers of polyhydric compounds, brominated epoxies, epoxy novolacs or similar polyhydroxyphenol resins, polyglycidyl ethers of glycols or polyglycols, and polyglycidyl esters of polycarboxylic acids. Preferably the epoxy resin is a polyglycidyl ether of a polyhydric phenol. The preferred polyhydric phenol is bisphenol-A.

Commercial examples of suitable epoxy resins include advanced EPIKOTE 828 (EPIKOTE is a trade mark), a product of Shell Chemical Company which is a diglycidyl ether of 2,2-bis(4-hydroxyphenyl)propane having an average molecular weight of about 380 and an Epoxy Equivalent Weight (EEW) in the range of from 180 to 195.

The invention also relates to an epoxy resin composition comprising an epoxy resin (i) and an elastomer modified phenolic composition (ii) of the invention in an amount being effective for curing of (i). Such curable epoxy resin compositions can be utilized in corrosion and chip-resistant coating formulations. If desired in a particular formulation, the epoxy resin (i) can be modified with a functionalized elastomer (b'). Such functionalized elastomers (b') suitable for the modification of epoxy resins (i) can be in general any of the functionalized elastomers (b) mentioned above, preferably (b') is present in amount of from 1 to 20 percent weight based on the weight of (i).

Epoxy resins (i) suitable for use with elastomer-modified phenolic compositions (ii) in powder coating applications, can be in general any of the solid epoxy resins (a) mentioned above. Liquid epoxy resins may be used provided that they are advanced to a solid state with, for example, bisphenol-A. The epoxy resin (i) generally has an EEW in the range of from 500 to 2000 and an average molecular weight in the range of from 1000 to 3500. Epoxy resins having higher EEW's and molecular weights may be used, provided that the resin is processable in the intended use, for example, in an extruder or melt compounder.

Elastomer modification of the epoxy resin (i) may be conducted by any suitable method, but it is generally a catalyzed addition reaction between the functional groups of the elastomer and the oxirane groups of the epoxy resin (i). The reaction can be conducted in a suitable solvent. For powder coating usage, the product can be subsequently isolated. The epoxy resin (i) may be modified with the functionalized elastomer (b') first and then advanced, or the epoxy resin may first be advanced and then modified, or the advancement and modification may be done in one step.

The modification of the epoxy resin (i) with a functionalized elastomer (b') is generally conducted at a temperature within the range of from 40°C to 200°C, preferably within the range of from 140°C to 180°C, for a reaction time of from 0.5 to 5 hours. A catalyst for the modification is added to the reaction in amounts of from 0.01 to 1.0 percent by weight, based on the total weight of the reaction mixture. The same catalysts as for phenolic modification are suitable, with the quaternary phosphonium salts such as ethyltriphenyl phosphonium iodide being preferred. The reaction product of the epoxy resin (i) and the functionalized elastomer (b) upon cooling is a friable solid having an EEW in the range of from 500 to 3,000, preferably in the range of from 700 to 2,500.

In the curable epoxy resin composition of the invention, the ratio, in equivalents, of the epoxy component (i) to the phenolic component (ii) is generally within the range of from 0.7:1 to 1:0.7, preferably within the range of from 1:0.8 to 1:1.

Table 1 shows the relationship between viscosity and percent of CTBN modifier (b) for epoxy resins (i). The viscosity data at both 150°C and 175°C show a marked increase in the viscosity when the composition contains about 25 weight percent or more of the modifier. Therefore, the epoxy resin will generally be modified with less than about 25 weight percent modifier.

Table 2 shows the relationship between T_{g} and percent of CTBN modifier (b) in the elastomer modified phenolic composition of the invention. From table 2 it can be derived that above 35 weight percent of (b), the T_{g} will generally be below about 50°C. Therefore the elastomer modified phenolic composition will generally comprise in the range of from 5 to 35 weight percent of the functionalized elastomer (b). The amount of the functionalized elastomer (b) in the elastomer-modified phenolic composition may vary considerably within the scope of the invention depending upon the amount of functionalized elastomer (b') in the epoxy resin component (i), but is preferably in the range of from 5 to 25 weight percent.

The curable epoxy resin composition of the invention may comprise other curing agents such as, amines, carboxy functional polyesters, polycarboxylic acids and other phenolics.

The epoxy resins (i) and the elastomer modified phenolic compositions of the present invention may include other additives, e.g., catalysts, pigments, fillers, light stabilizers and antioxidants, when used in a powder coating composition, such conventional powder coating additives as flow control agents, anti-popping agents, and powder flow materials may also be included.

Generally, the flow control agent when used is present in amounts of from 0.05 to 5.0 percent by weight based on the total weight of a powder coating composition.

Antipopping agents can be added to the composition to allow volatile materials to escape from the film during baking. Benzoin is a commonly preferred antipopping agent and when used is present in amounts from 0.5 to 3.0 percent by weight based on total weight of a powder coating composition.

In addition, powder coating compositions may contain fumed silica as a powder flow additive to reduce powder caking during storage. An example of fumed silica is CAB-O-SIL (CAB-O-SIL is a trade mark) sold by Cabot Corporation. The powder flow additive when used is present in amounts ranging of from 0.1 to 1.0 percent by weight based on the total weight of a powder coating composition.

The elastomer-modified powder coating compositions of the invention may optionally include a small percentage of catalysts in order to increase the crosslinking rate of such coating compositions. Baking temperatures will ordinarily be within the range of from 120°C to 204°C. Suitable catalysts are quaternary ammonium salts, quaternary phosphonium salts, phosphines, amd imidazoles. The catalyst is generally present in the composition in amounts of from 0 to 5 weight percent, based on total weight of the coating composition.

In accordance with the powder coating embodiment of the invention, thermosetting chip-resistant powder coating compositions are prepared by melt blending the ingredients of the coating compositions. This can be accomplished by first dry blending the ingredients in a planetary mixer and then melt blending the admixture in an extruder at a suitable temperature within the range of from 80°C to 130°C. The extrudate is then cooled and pulverized into a particulate blend.

The thermosetting chip-resistant coating powder composition can then be applied directly to a substrate of, e.g., a metal such as steel or aluminum. Non-metallic substrates such as plastics and composites can also be used. Application can be by electrostatic spraying or by use of a fluidized bed. Electrostatic spraying is the preferred method. The coating powder can be applied in a single sweep or in several passes to provide a film thickness after cure of from 2.0 to 15.0 mm.

The substrate can optionally be preheated prior to application of a powder coating composition to promote uniform and thicker powder deposition. After application of the coating powder, the powder-coated substrate is baked typically at 121 °C to 204 °C for from 1 minute to 60 minutes, preferably at 149 °C to 204 °C for from 10 minutes to 30 minutes.

The powder coating compositions can be applied directly upon bare metal, e.g., upon untreated, unprimed steel, or upon pretreated, i.e., phosphatized, unprimed steel. The powder coating compositions can also be applied upon phosphatized steel having a thin (0.8 mm to 2 mm) layer of an electrodeposited primer, cured or uncured before the application of the powder coating composition. The electrodeposited primer coating upon the metal substrate can be, for example, a cathodic electrodeposition primer composition such as UNIPRIME 3150 (UNIPRIME is a trade mark) primer available from PPG Industries, Inc. In one aspect of the present invention, it is contemplated that the powder coating composition can be applied directly upon an uncured electrodeposited primer coating and the powder coating layer can be co-cured by heating at temperatures between 149°C and 177°C for from 10 minutes to 30 minutes.

The powder coating compositions of this invention exhibit improved flow characteristics compared to conventional powder coating compositions in which the elastomer modifier is incorporated in the epoxy component only. In addition, the powder coating compositions of the invention have excellent impact resistance as shown in Table 4.

After application and curing of the elastomer-modified powder coating composition, at least one topcoat layer can be applied over the coating layer. The topcoat can be, for example, a polyester-based coating cured with a melamine resin, an acrylic-based coating cured with a melamine resin, an acrylic and polyester containing coating cured with a melamine resin or an epoxy-based coating such as a glycidyl acrylate coating. The topcoat may be solvent-based, solventless, water-based or a powder coating. The elastomer-modified powder coating layers have excellent intercoat adhesion to such topcoats, as well as to an electrodeposited primer coating layer, thereby providing excellent chip resistance to the entire composite coating upon the metal substrate.

The invention composition can be used in automotive applications to provide desired anti-chip protection. For example, an automotive coating including an electrodeposited primer layer, a layer containing the curable epoxy resin composition of the invention, and a topcoat layer can be used on those portions of a car susceptible to stone chipping. Similarly, a coating including an electrodeposited primer layer and a layer containing the elastomer-modified powder can be used as underbody coatings in areas which are generally not topcoated. The coated articles of the present invention can maintain chip resistance, corrosion resistance, and excellent intercoat adhesion throughout the temperature range, i.e. of from -23°C to 38°C, and corrosive environments normally encountered by automotive vehicles. In addition, coatings including the layer containing the elastomer-modified epoxy upon the metal substrate and a topcoat layer thereon may be used in environments which are not typically as corrosive as automotive applications, e.g., appliance coatings, yet still provide chip resistance and excellent intercoat adhesion.

### Examples 1-5 (comparative)

Table 1 below describes the compositions of five elastomer-modified epoxy resins (i) and a standard prepared to demonstrate the relationship between viscosity and percent CTBN reacted in to an epoxy resin.

Ten g of CTBN 1300X8 (available from B.F. Goodrich Co. as HYCAR), 25.10 g of bisphenol-A (BPA) and 64.90 g of EPIKOTE 828 in a 0,11 1 open top metal container were heated on a 200°C hot plate while stirring until all of the BPA melted. Subsequently, 0.06 g of ETPPI catalyst was added and the temperature was gradually raised to 180°C while stirring. The reaction was continued for three hours at approximately 180°C, at which point the container was removed from the hot plate and allowed to cool at room temperature. The resultant friable resinous material was broken into fine particles for subsequent evaluation.

Epoxy resin components 2-5 were prepared under identical conditions except the ratios of EPIKOTE Resin, CTBN and BPA were varied as shown in Table 1.

The properties of these rubber-modified epoxy resins are compared to a non-elastomeric epoxy resin (STD), prepared in a similar manner, in Table 1. As can be seen from the table, the introduction of more than 20 weight percent elastomer into the epoxy resulted in unacceptably high melt viscosity.

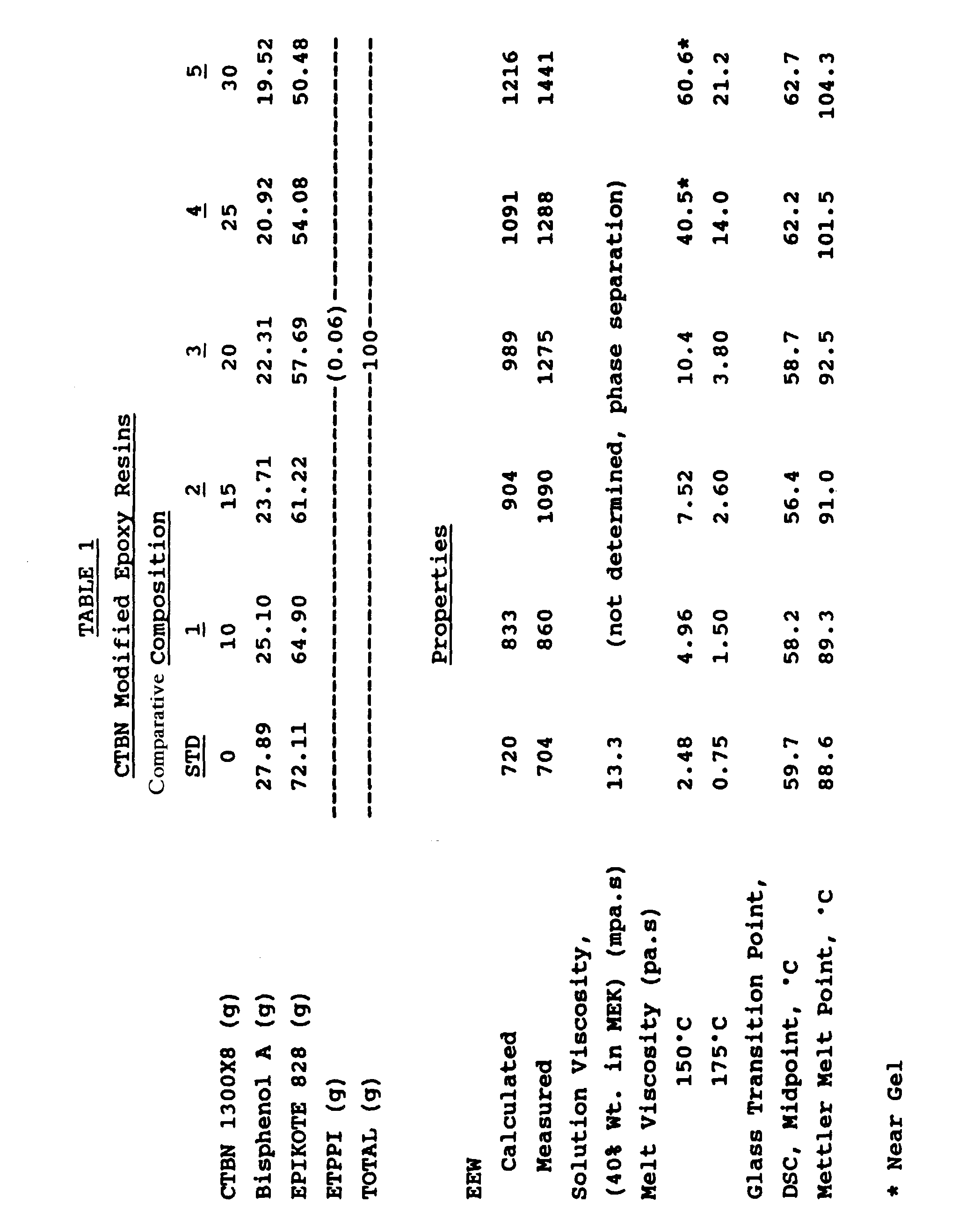

### Examples 6-10

Table 2 below describes the compositions of five elastomer-modified phenolic compositions and a standard prepared to demonstrate the relationship between viscosity and percent CTBN added.

Ten g of CTBN 1300X8, 42.9 g of EPIKOTE 828 and 47.1 g of BPA in a 0.11 l open top metal container were heated on a 200°C hot plate while stirring until all of the bisphenol-A melted. Subsequently, 0.06 g of ETPPI catalyst was added and the temperature was gradually raised to 180°C while stirring. The reaction was continued for three hours at approximately 180°C, at which point the container was removed from the hot plate and allowed to cool at room temperature. The resultant friable resinous material was broken into fine particles for subsequent evaluation.

Experimental elastomer-modified phenolic curing agents 7-10 were prepared under identical conditions except the ratios of BPA, CTBN and EPIKOTE were varied as shown in Table 2.

The properties of these elastomer-modified phenolic curing agents are compared to a standard non-elastomeric phenolic (STD) in Table 2. As can be seen from the table, the melt viscosity (150°C) of the elastomer-modified phenolic remained at approximately 10.0 pa.s even in the upper portion of the range of elastomer modification.

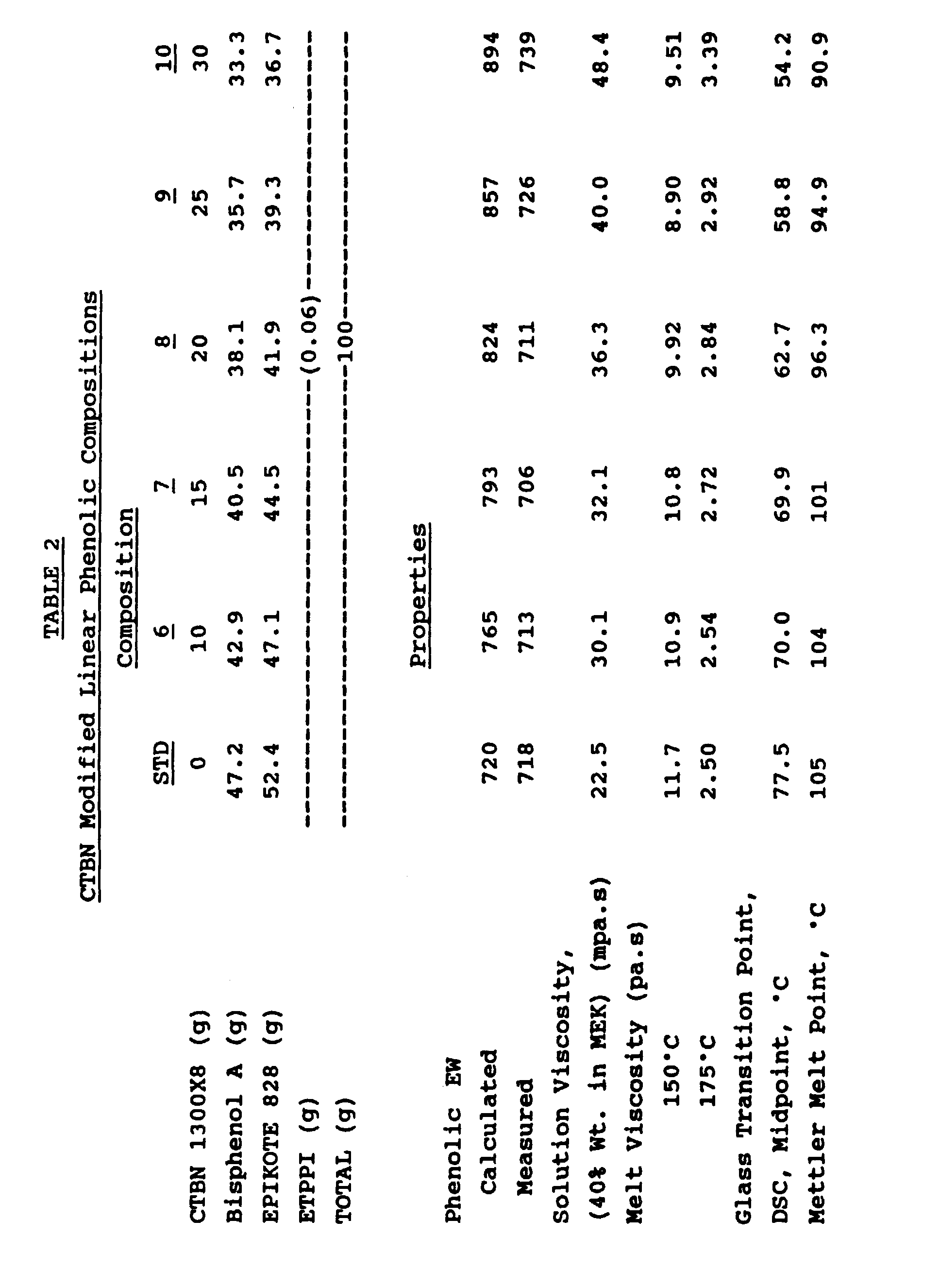

### Example 11 ( comparative)

A solid epoxy resin containing ten percent rubber modification was prepared as follows: 651.5 g of EPIKOTE 828, (a liquid epoxy resin with EEW of 188), 248.5 g of bisphenol-A (phenolic equivalent weight 114) and 100.0 g of CTBN 1300X8 were placed in a two liter glass resin kettle. The kettle was fitted with a lid containing four openings for a stirrer, condenser, sparge tube and temperature indicator. An electric heating mantle surrounding the resin kettle was used to raise the temperature of the mixture to 90°C in one hour. 0.3 g of ETPPI catalyst was then added and the mixture was raised to 160°C in thirty minutes, allowed to exotherm and held at 170°C for 3.5 hours. The product was poured into an aluminum pan to cool and solidify. The properties of this material are listed in Table 3 below.

### Example 12

A solid elastomer modified phenolic composition containing ten percent rubber modification was prepared as follows: 406.7 g of EPIKOTE 828, 493.3 g of BPA and 100 g of CTBN 1300X8 were placed in a two liter glass resin kettle. The apparatus and procedure were identical to that of Example 11, except 0.6 g of ETPPI was used. The properties of this material are listed in Table 3 below.

### Example 13

A solid elastomer modified phenolic composition containing twenty percent rubber modification was prepared as follows: 838 g of EPIKOTE 828, 762 g of BPA and 400 g of CTBN 1300X8 were placed in a two liter glass resin kettle. The apparatus and procedure were identical to that of Example 11, except 1.2 g of ETPPI catalyst was used. The properties of this material are listed in Table 3 below.

### Example 14 (comparative)

A solid epoxy resin was prepared as follows: 1358.2 g of EPIKOTE 828, 501.8 g of BPA were placed in a two liter glass resin kettle. In an apparatus identical to Example 11, 1.1 g of ETPPI catalyst was added after heating the initial mixture to 90°C over an hour period. The mixture was then raised to 160°C in one hour, allowed to exotherm and held for 1.5 hours at 170°C. 140 g of EPIKOTE DPS-155 (EPIKOTE DPS-155 is a trade mark), an epoxy phenolic novolac resin, was then added and mixed with the previous material for 1.5 hours at 180°C. The homogenous product was poured into an aluminum pan to cool and solidify. The properties of this material are listed in Table 3 below.

### Example 15 (comparative)

A solid epoxy resin containing twenty percent rubber modification was prepared as follows: 584.6 g of EPIKOTE 828, 215.4 g of BPA and 200 g of CTBN 1300X8 were placed in a two liter glass resin kettle. The apparatus, procedure and level of ETPPI catalyst were identical to that of Example 11. The properties of this material are listed in Table 3 below.

**TABLE 3**

| Example | 11* | 12 | 13 | 14* | 15* |
|---|---|---|---|---|---|
| Epoxide Equivalent Wt. (g) | 812 | --- | --- | 561 | 1075 |
| Phonolic Equivalent Wt. (g) | --- | 415 | 758 | --- | --- |
| Melt Viscosity 150°C, (pa.s) | 5.3 | 2.8 | 13.4 | 1.8 | 16.0 |
| Mettler Melt Point, °C | 91 | 91 | 100 | 84 | 95 |
| Glass Transition Point, DSC, Midpoint, °C | 47 | 59 | 63 | 50 | 58 |

| | | | | | |
|---|---|---|---|---|---|
| * Comparative | | | | | |

As can be seen from the table, the melt viscosities of the elastomer modified phenolic compositions (see examples 12 and 13) are lower than those of rubber-modified epoxy resin compositions (see example 11 and 15). In addition, the glass transition points of the elastomer modified phenolic compositions, when compared to the elastomer modified epoxy resin compositions at similar rubber content, are higher. The rubber-modified phenolic compositions with lower melt viscosities, when combined with epoxy resin compositions that are either rubber-modified or unmodified, lead to lower melt viscosity and higher flow formulated products. For example, this gives an advantage when a 10 percent rubber composition in a final product is desired. In order to obtain a 10 percent final rubber composition, for a conventional powder coating composition, a high melt viscosity 20 percent rubber containing epoxy resin (see example 15) must be used with a conventional curative. However, when the elastomeric moiety is incorporated in the lower melt viscosity elastomer-modified phenolic composition, a lower percent rubber incorporated epoxy resin or non-elastomeric epoxy resin which have lower melt viscosities than a 20 percent rubber-modified epoxy resin can be used. The lower overall viscosity results in improved flow.

In addition, the higher glass transition points of the elastomer modified phenolic compositions indicate that the neat and formulated products will have greater resistance to sintering.

### Examples 16-17 and Comparative Examples A and B

Table 4 below compares the properties of various elastomer-modified powder coatings of this invention with those of conventional powder coating compositions. STD is a powder coating composition without any elastomer modifier. Example 16 is a powder coating composition of 10 weight percent CTBN modified phenolic composition and 10 weight percent CTBN modified epoxy resin component. Example 17 is a powder coating composition of 20 weight percent CTBN modified phenolic composition and epoxy resin without any elastomeric modifier. Comparative example A is a conventional epoxy resin cured with an acid functional polyester resin and comparative example B is a powder coating composition of an epoxy resin modified with CTBN combined with an acid functional polyester curing agent. A solid epoxy resin was used in all of the examples (solid powder coating resin, EPIKOTE 2002 (EPIKOTE 2002 is a trade mark) and with 10% polyacrylate flow control agent, EPIKOTE 2002-FC-10 (EPIKOTE 2002-FC-10 is a trade mark) (available from Shell Chemical Company).

The ingredients listed in Table 4 were each blended in a planetary mixer for about 2 to 3 minutes, then melt blended through a Buss PR-46 extruder. The extrudates were cooled on a chill roll, broken into chunks, and ground in a hammer mill to a fine powder. The powders were then sieved through a 100 mesh screen to remove any of the oversized particles.

The resultant powder coating compositions were electrostatically sprayed onto grounded steel panels using an electrostatic spray gun. A layer of about 2 mils (0.05 mm) ultimate thickness was applied and cured for 10 minutes in a 204 °C oven.

The performance of these elastomer-modified powder coatings are shown in Table 4 below. As can be seen from the performance data, the inclined plate flow 177 °C of the powder coatings containing the elastomer-modified phenolic composition at approximately 44-63 mm are better than the elastomer-modified epoxy resin containing composition with a conventional curative (B). Higher inclined plate flow numbers generally indicate improved flow in coating applications. Surprisingly, the impact resistance of the powder coatings containing the elastomer-modified phenolic curatives are improved. The impact resistance at 177°C is much better than that for the other typical powder coatings.

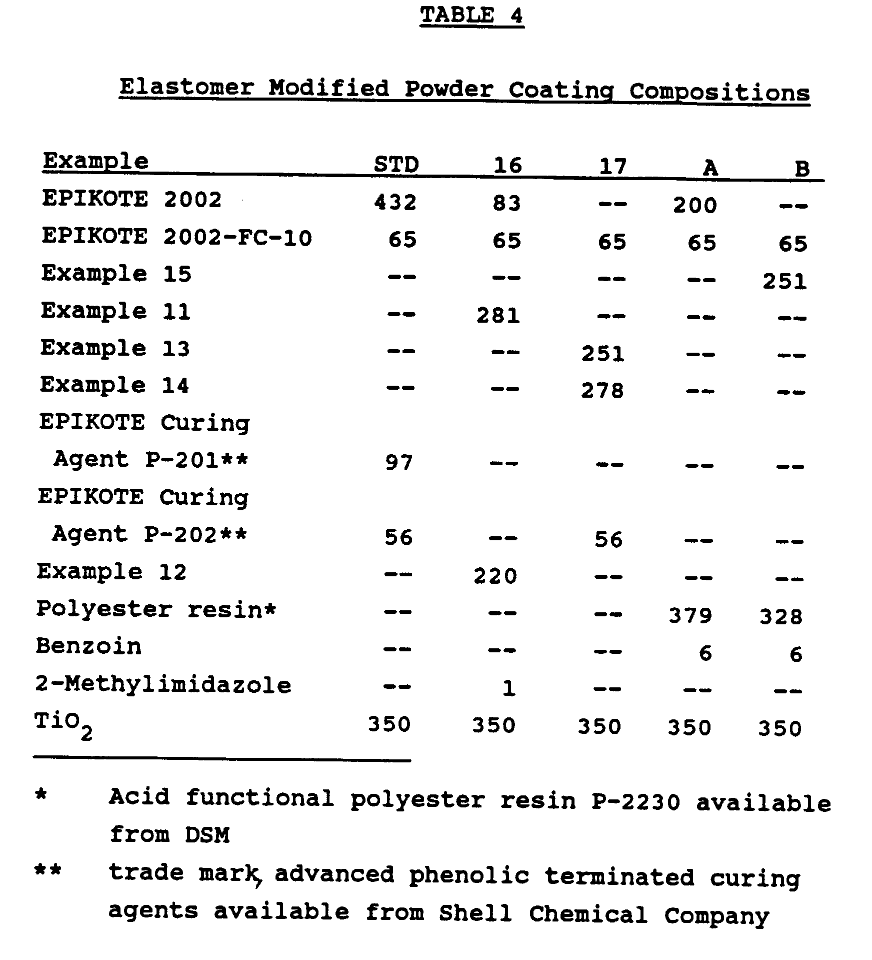

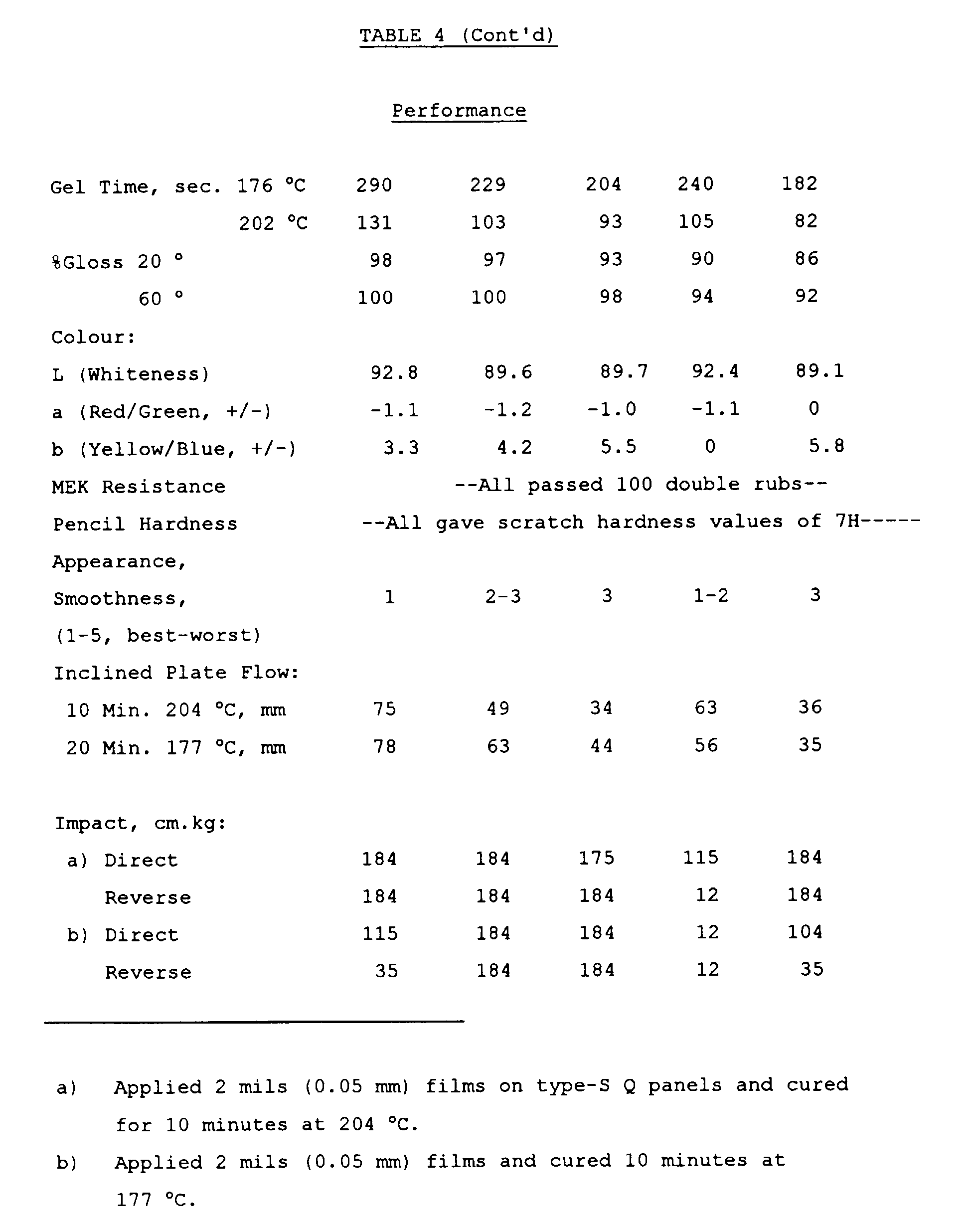

## Claims (Claims for the following Contracting State(s): BE, DE, FR, GB, IT, NL, SE)

1. An elastomer modified phenolic composition having an average of at least 1.5 terminal hydroxyl groups per molecule and a phenolic equivalent weight of from 300 g to 2000 g which is obtainable by contacting in a reaction mixture
- an epoxy resin (a) having on average more than 1 epoxy group per molecule,
- a functionalized elastomer (b) comprising at least 1.5 functional groups which are reactive with epoxy or hydroxy groups, per molecule and
- an equivalent excess with respect to (a) of a dihydric phenol (c),
at a temperature of from 40 °C to 200 °C in the presence of a catalyst for a period of time sufficient for the essentially complete consumption of the epoxy groups.

2. A composition according to claim 1 wherein the amount of (b) is 5-35 %w based on total weight (a) + (b) + (c).

3. A composition according to any one of claims 1 to 2 wherein (a) is a linear diepoxy resin which is reacted with 1 to 4 molar equivalents of (c).

4. A composition according to any one of claims 1 to 3 wherein the catalyst is a quaternary phosphonium salt.

5. A curable epoxy resin composition comprising
- (i) an epoxy resin and
- (ii) a composition according to any one of claims 1 to 4 in an amount being effective for curing of (i).

6. A composition according to claim 5 in which (i) further comprises a functionalized elastomer (b').

7. A composition according to claim 6 wherein (b') is present in an amount of 1 to 20 percent weight based on the weight of (i).

8. A composition according to any one of claims 1 to 7 wherein the elastomeric compounds (b) and (b') are independently or both an end group functionalized elastomer X-B-X wherein B is a polymer backbone polymerized from material selected from the group consisting of a C₄ to C₁₀ diene; a C₄ to C₁₀ diene and a vinyl aromatic monomer; a C₄ to C₁₀ diene and a vinyl nitrile, a C₄ to C₁₀ diene and a vinyl nitrile and a vinyl aromatic monomer; a C₄ to C₁₀ diene and a vinyl nitrile and a vinyl aromatic monomer; an a C₄ to C₁₀ diene and a vinyl nitrile and an (alkyl) acrylate; and X is selected from the group consisting of carboxy, amino, hydroxy, epoxy, mercaptan, anhydride and isocyanate groups.

9. A composition according to claim 8 wherein (b) and (b') are independently or both a carboxy-terminated poly(butadiene-acrylonitrile).

10. A composition according to any one of claims 7 to 9 wherein the ratio of (i) and (ii) is in the range of from 0.7:1.0 to 1.0:0.7 equivalents.

11. A composition according to any one of claims 1 to 10 wherein the epoxy resins (a) and (i) are independently or both a diglycidylether of 2,2-bis (4-hydroxyphenyl) propane.

12. A composition according to any one of claims 1 to 11 wherein the dihydric phenol (c) is 2, 2-bis(4-hydroxyphenyl)propane.

13. A coating composition comprising a composition according to any one of claims 5 to 12.

## Claims (Claims for the following Contracting State(s): ES)

1. A process for the preparation of an elastomer modified phenolic composition having an average of at least 1.5 terminal hydroxyl groups per molecule and a phenolic equivalent weight of from 300 g to 2000 g by reaction of
- an epoxy resin (a) having on average more than 1 epoxy group per molecule,
- a functionalized elastomer (b) comprising at least 1.5 functional groups which are reactive with epoxy or hydroxy groups, per molecule and
- an equivalent excess with respect to (a) of a dihydric phenol (c),
at a temperature of from 40 °C to 200 °C in the presence of a catalyst for a period of time sufficient for the essentially complete consumption of the epoxy groups.

2. A process according to claim 1 wherein the amount of (b) is 5-35 %w based on total weight (a) + (b) + (c).

3. A process according to any one of claims 1 to 2 wherein (a) is a linear diepoxy resin which is reacted with 1 to 4 molar equivalents of (c).

4. A process according to any one of claims 1 to 3 wherein the catalyst is a quaternary phosphonium salt.

5. A process for the preparation of a curable epoxy resin composition comprising
- (i) an epoxy resin and
- (ii) a composition according to any one of claims 1 to 4 in an amount being effective for curing of (i) by mixing the two components.

6. A process according to claim 5 in which (i) further comprises a functionalized elastomer (b').

7. A process according to claim 6 wherein (b') is present in an amount of 1 to 20 percent weight based on the weight of (i).

8. A process according to any one of claims 1 to 7 wherein the elastomeric compounds (b) and (b') are independently or both an end group functionalized elastomer X-B-X wherein B is a polymer backbone polymerized from material selected from the group consisting of a C₄ to C₁₀ diene; a C₄ to C₁₀ diene and a vinyl aromatic monomer; a C₄ to C₁₀ diene and a vinyl nitrile, a C₄ to C₁₀ diene and a vinyl nitrile and a vinyl aromatic monomer; a C₄ to C₁₀ diene and a vinyl nitrile and a vinyl aromatic monomer; an a C₄ to C₁₀ diene and a vinyl nitrile and an (alkyl) acrylate; and X is selected from the group consisting of carboxy, amino, hydroxy, epoxy, mercaptan, anhydride and isocyanate groups.

9. A process according to claim 8 wherein (b) and (b') are independently or both a carboxy-terminated poly(butadiene-acrylonitrile).

10. A process according to any one of claims 7 to 9 wherein the ratio of (i) and (ii) is in the range of from 0.7:1.0 to 1.0:0.7 equivalents.

11. A process according to any one of claims 1 to 10 wherein the epoxy resins (a) and (i) are independently or both a diglycidylether of 2,2-bis (4-hydroxyphenyl)propane.

12. A process according to any one of claims 1 to 11 wherein the dihydric phenol (c) is 2,2-bis(4-hydroxyphenyl)propane.

## Patentansprüche (Patentansprüche für folgende(n) Vertragsstaat(en): BE, DE, FR, GB, IT, NL, SE)

1. Elastomermodifizierte phenolische Zusammensetzung mit durchschnittlich mindestens 1,5 terminalen Hydroxylgruppen pro Molekül und einem Phenoläquivalentgewicht von 300 g bis 2000 g, die dadurch erhältlich ist, daß man in einer Reaktionsmischung
- ein Epoxidharz (a) mit durchschnittlich mehr als 1 Epoxidgruppe pro Molekül,
- ein funktionalisiertes Elastomer (b) mit mindestens 1,5 gegenüber Epoxid- oder Hydroxylgruppen reaktiven funktionellen Gruppen pro Molekül und
- ein zweiwertiges Phenol (c) in einem Äquivalentüberschuß bezüglich (a)
in Gegenwart eines Katalysators bei einer Temperatur von 40°C bis 200°C über einen zum weitgehend vollständigen Verbrauch der Epoxidgruppen ausreichenden Zeitraum in Berührung bringt.

2. Zusammensetzung nach Anspruch 1, wobei die Menge an (b) 5-35 Gew.-%, bezogen auf das Gesamtgewicht (a) + (b) + (c), beträgt.

3. Zusammensetzung nach einem der Ansprüche 1 bis 2, wobei (a) ein lineares Diepoxidharz ist, das mit 1 bis 4 Moläquivalenten (c) umgesetzt wird.

4. Zusammensetzung nach einem der Ansprüche 1 bis 3, wobei der Katalysator ein quaternäres Phosphoniumsalz ist.

5. Härtbare Epoxidharzzusammensetzung, enthaltend
- (i) ein Epoxidharz und
- (ii) eine Zusammensetzung gemäß einem der Ansprüche 1 bis 4 in einer zur Härtung von (i) wirksamen Menge.

6. Zusammensetzung nach Anspruch 5, bei der (i) weiter ein funktionalisiertes Elastomer (b') enthält.

7. Zusammensetzung nach Anspruch 6, wobei (b') in einer Menge von 1 bis 20 Gewichtsprozent, bezogen auf das Gewicht von (i), vorliegt.

8. Zusammensetzung nach einem der Ansprüche 1 bis 7, wobei die elastomeren Verbindungen (b) und (b') beide oder unabhängig voneinander ein endgruppenfunktionalisiertes Elastomer X-B-X, worin B eine aus unter einem C₄-C₁₀-Dien; einem C₄-C₁₀-Dien und einem vinylaromatischen Monomer; einem C₄-C₁₀-Dien und einem Vinylnitril; einem C₄-C₁₀-Dien, einem Vinylnitril und einem vinylaromatischen Monomer; einem C₄-C₁₀-Dien, einem Vinylnitril und einem vinylaromatischen Monomer; einem C₄-C₁₀-Dien, einem Vinylnitril und einem Acrylsäure(alkyl)ester ausgewählten Material polymerisierte Polymerhauptkette bedeutet und X aus der Gruppe, bestehend aus Carboxyl-, Amino-, Hydroxyl-, Epoxid-, Mercaptan-, Anhydrid- und Isocyanatgruppen, ausgewählt ist, sind.

9. Zusammensetzung nach Anspruch 8, wobei (b) und (b') beide oder unabhängig voneinander ein carboxylterminiertes Butadien-Acrylnitril-Copolymer sind.

10. Zusammensetzung nach einem der Ansprüche 7 bis 9, wobei das Verhältnis von (i) zu (ii) im Bereich von 0,7:1,0 bis 1,0:0,7, bezogen auf Äquivalente, liegt.

11. Zusammensetzung nach einem der Ansprüche 1 bis 10, wobei die Epoxidharze (a) und (i) beide oder unabhängig voneinander ein Diglycidylether von 2,2-Bis(4-hydroxyphenyl)propan sind.

12. Zusammensetzung nach einem der Ansprüche 1 bis 11, wobei das zweiwertige Phenol (c) 2,2-Bis (4-hydroxyphenyl)propan ist.

13. Lackzusazmensetzung, enthaltend eine Zusammensetzung gemäß einem der Ansprüche 5 bis 12.

## Patentansprüche (Patentansprüche für folgende(n) Vertragsstaat(en): ES)

1. Verfahren zur Herstellung einer elastomermodifizierten phenolischen Zusammensetzung mit durchschnittlich mindestens 1,5 terminalen Hydroxylgruppen pro Molekül und einem phenoläquivalentgewicht von 300 g bis 2000 g, bei dem man
- ein Epoxidharz (a) mit durchschnittlich mehr als 1 Epoxidgruppe pro Molekül,
- ein funktionalisiertes Elastomer (b) mit mindestens 1,5 gegenüber Epoxid- oder Hydroxylgruppen reaktiven funktionellen Gruppen pro Molekül und
- ein zweiwertiges Phenol (c) in einem Äquivalentüberschuß bezüglich (a) in Gegenwart eines Katalysators bei einer Temperatur von 40°C bis 200°C über einen zum weitgehend vollständigen Verbrauch der Epoxidgruppen ausreichenden Zeitraum umsetzt.

2. Verfahren nach Anspruch 1, wobei die Menge an (b) 5-35 Gew.-%, bezogen auf das Gesamtgewicht (a) + (b) + (c), beträgt.

3. Verfahren nach einem der Ansprüche 1 bis 2, wobei (a) ein lineares Diepoxidharz ist, das mit 1 bis 4 Moläquivalenten (c) umgesetzt wird.

4. Verfahren nach einem der Ansprüche 1 bis 3, wobei der Katalysator ein quaternäres Phosphoniumsalz ist.

5. Verfahren zur Herstellung einer härtbaren Epoxidharzzusammensetzung, enthaltend
- (i) ein Epoxidharz und
- (ii) eine Zusammensetzung gemäß einem der Ansprüche 1 bis 4 in einer zur Härtung von (i) wirksamen Menge, durch Mischen der beiden Komponenten.

6. Verfahren nach Anspruch 5, bei der (i) weiter ein funktionalisiertes Elastomer (b') enthält.

7. Verfahren nach Anspruch 6, wobei (b') in einer Menge von 1 bis 20 Gewichtsprozent, bezogen auf das Gewicht von (i), vorliegt.

8. Verfahren nach einem der Ansprüche 1 bis 7, wobei die elastomeren Verbindungen (b) und (b') beide oder unabhängig voneinander ein endgruppenfunktionalisiertes Elastomer X-B-X, worin B eine aus unter einem C₄-C₁₀-Dien; einem C₄-C₁₀-Dien und einem vinylaromatischen Monomer; einem C₄-C₁₀-Dien und einem Vinylnitril; einem C₄-C₁₀-Dien, einem Vinylnitril und einem vinylaromatischen Monomer; einem C₄-C₁₀-Dien, einem Vinylnitril und einem vinylaromatischen Monomer; einem C₄-C₁₀-Dien, einem Vinylnitril und einem Acrylsäure(alkyl)ester ausgewählten Material polymerisierte Polymerhauptkette bedeutet und X aus der Gruppe, bestehend aus Carboxyl-, Amino-, Hydroxyl-, Epoxid-, Mercaptan-, Anhydrid- und Isocyanatgruppen, ausgewählt ist, sind.

9. Verfahren nach Anspruch 8, wobei (b) und (b') beide oder unabhängig voneinander ein carboxylterminiertes Butadien-Acrylnitril-Copolymer sind.

10. Verfahren nach einem der Ansprüche 7 bis 9, wobei das Verhältnis von (i) zu (ii) im Bereich von 0,7:1,0 bis 1,0:0,7, bezogen auf Äquivalente, liegt.

11. Verfahren nach einem der Ansprüche 1 bis 10, wobei die Epoxidharze (a) und (i) beide oder unabhängig voneinander ein Diglycidylether von 2,2-Bis (4-hydroxyphenyl)propan sind.

12. Verfahren nach einem der Ansprüche 1 bis 11, wobei das zweiwertige Phenol (c) 2,2-Bis (4-hydroxyphenyl)propan ist.

## Revendications (Revendications pour l'(les) Etat(s) contractant(s) suivant(s): BE, DE, FR, GB, IT, NL, SE)

1. Composition phénolique modifiée par un élastomère, possédant une moyenne d'au moins 1,5 radical hydroxyle terminal par molécule et un équivalent-poids phénolique de 300 g à 2000 g, que l'on peut obtenir par la mise en contact, dans un mélange réactionnel,
- d'une résine époxy (a) possédant, en moyenne, plus d'un radical époxy par molécule,
- d'un élastomère fonctionnalisé (b) comprenant au moins 1,5 groupe fonctionnel qui réagit avec des radicaux époxy ou hydroxyle, par molécule et
- d'un excès équivalent, par rapport à (a), d'un phénol dihydroxylé (c),
à une température de 40°C à 200°C, en présence d'un catalyseur et pendant une période qui suffit à la consommation sensiblement complète des radicaux époxy.

2. Composition suivant la revendication 1, caractérisée en ce que la quantité de (b) varie de 5 à 35% en poids sur base du poids total de (a) + (b) + (c).

3. Composition suivant l'une quelconque des revendications 1 et 2, caractérisée en ce que (a) est une résine diépoxy linéaire qui est mise à réagir avec 1 à 4 équivalents molaires de (c).

4. Composition suivant l'une quelconque des revendications 1 à 3, caractérisée en ce que le catalyseur est un sel de phosphonium quaternaire.

5. Composition de résine époxy durcissable comprenant
- (i) une résine époxy et
- (ii) une composition suivant l'une quelconque des revendications 1 à 4, en une proportion efficace pour le durcissement de (i).

6. Composition suivant la revendication 5, caractérisée en ce que (i) comprend en outre un élastomère fonctionnalisé (b').

7. composition suivant la revendication 6, caractérisée en ce que (b') est présent en une proportion de 1 à 20% en poids sur base du poids de (i).

8. Composition suivant l'une quelconque des revendications 1 à 7, caractérisée en ce que les composés élastomériques (b) et (b') sont indépendamment ou tous deux un élastomère à groupe terminal fonctionnalisé X-B-X où B est une ossature polymérique polymérisée à partir d'une matière choisie dans le groupe formé d'un diène en C₄ à C₁₀, d'un diène en C₄ à C₁₀ et d'un monomère vinylaromatique, d'un diène en C₄ à C₁₀ et d'un nitrile vinylique, d'un diène en C₄ à C₁₀ et d'un nitrile vinylique et d'un monomère vinylaromatique, d'un diène en C₄ à C₁₀ et d'un nitrile vinylique et d'un monomère vinyl-aromatique, d'un diène en C₄ à C₁₀ et d'un nitrile vinylique et d'un acrylate d'alkyle et X est choisi dans le groupe formé par les radicaux carboxyle, amino, hydroxyle, époxy, mercaptan, anhydride et isocyanate.

9. Composition suivant la revendication 8, caractérisée en ce que (b) et (b') sont indépendamment ou tous deux du poly(butadiène-acrylonitrile) à terminaison carboxyle.

10. Composition suivant l'une quelconque des revendications 7 à 9, caractérisée en ce que le rapport de (i) et de (ii) varie dans la plage de 0,7:1,0 à 1,0: 0,7 équivalent.

11. Composition suivant l'une quelconque des revendications 1 à 10, caractérisée en ce que les résines époxy (a) et (i) sont indépendamment ou toutes deux un éther diglycidylique du 2,2-bis(4-hydroxyphényl) propane.

12. Composition suivant l'une quelconque des revendications 1 à 11, caractérisée en ce que le phénol dihydroxylé (c) est le 2,2-bis(4-hydroxyphényl)propane.

13. Composition de revêtement qui comprend une composition suivant l'une quelconque des revendications 5 à 12.

## Revendications (Revendications pour l'(les) Etat(s) contractant(s) suivant(s): ES)

1. Procédé de préparation d'une composition phénolique modifiée par un élastomère, possédant une moyenne d'au moins 1,5 radical hydroxyle terminal par molécule et un équivalent-poids phénolique de 300 g à 2000 g, par la réaction de
- d'une résine époxy (a) possédant, en moyenne, plus d'un radical époxy par molécule,
- d'un élastomère fonctionnalisé (b) comprenant au moins 1,5 groupe fonctionnel qui réagit avec des radicaux époxy ou hydroxyle, par molécule et
- d'un excès équivalent, par rapport à (a), d'un phénol dihydroxylé (c),
à une température de 40°C à 200°C, en présence d'un catalyseur et pendant une période qui suffit à la consommation sensiblement complète des radicaux époxy.

2. Procédé suivant la revendication 1, caractérisé en ce que la quantité de (b) varie de 5 à 35% en poids sur base du poids total de (a) + (b) + (c).

3. Procédé suivant l'une quelconque des revendications 1 et 2, caractérisé en ce que (a) est une résine diépoxy linéaire qui est mise à réagir avec 1 à 4 équivalents molaires de (c).

4. Procédé suivant l'une quelconque des revendications 1 à 3, caractérisé en ce que le catalyseur est un sel de phosphonium quaternaire.

5. Procédé de résine époxy durcissable comprenant
- (i) une résine époxy et
- (ii) une composition suivant l'une quelconque des revendications 1 à 4, en une proportion efficace pour le durcissement de (i).

6. Procédé suivant la revendication 5, caractérisé en ce que (i) comprend en outre un élastomère fonctionnalisé (b').

7. Procédé suivant la revendication 6, caractérisé en ce que (b') est présent en une proportion de 1 à 20% en poids sur base du poids de (i).

8. Procédé suivant l'une quelconque des revendications 1 à 7, caractérisé en ce que les composés élastomériques (b) et (b') sont indépendamment ou tous deux un élastomère à groupe terminal fonctionnalisé X-B-X où B est une ossature polymérique polymérisée à partir d'une matière choisie dans le groupe formé d'un diène en C₄ à C₁₀, d'un diène en C₄ à C₁₀ et d'un monomère vinylaromatique, d'un diène en C₄ à C₁₀ et d'un nitrile vinylique, d'un diène en C₄ à C₁₀ et d'un nitrile vinylique et d'un monomère vinylaromatique, d'un diène en C₄ à C₁₀ et d'un nitrile vinylique et d'un monomère vinyl-aromatique, d'un diène en C₄ à C₁₀ et d'un nitrile vinylique et d'un acrylate d'alkyle et X est choisi dans le groupe formé par les radicaux carboxyle, amino, hydroxyle, époxy, mercaptan, anhydride et isocyanate.

9. Procédé suivant la revendication 8, caractérisé en ce que (b) et (b') sont indépendamment ou tous deux du poly(butadiène-acrylonitrile) à terminaison carboxyle.

10. Procédé suivant l'une quelconque des revendications 7 à 9, caractérisé en ce que le rapport de (i) et de (ii) varie dans la plage de 0,7:1,0 à 1,0:0,7 équivalent.

11. Procédé suivant l'une quelconque des revendications 1 à 10, caractérisé en ce que les résines époxy (a) et (i) sont indépendamment ou toutes deux un éther diglycidylique du 2,2-bis(4-hydroxyphényl) propane.

12. Procédé suivant l'une quelconque des revendications 1 à 11, caractérisé en ce que le phénol dihydroxylé (c) est le 2,2-bis-4-hydroxyphényl)propane.
